(19) Europäisches Patentamt
European Patent Office
Office européen des brevets

(11) Veröffentlichungsnummer: **0 335 233 A2**

(12) # EUROPÄISCHE PATENTANMELDUNG

(21) Anmeldenummer: **89105089.0**

(22) Anmeldetag: **22.03.89**

(51) Int. Cl.⁴: **C08F 220/14 , C08F 220/54 , //(C08F220/14,220:54), (C08F220/54,220:14)**

(30) Priorität: **31.03.88 DE 3811053**

(43) Veröffentlichungstag der Anmeldung: **04.10.89 Patentblatt 89/40**

(84) Benannte Vertragsstaaten: **DE ES FR GB IT**

(71) Anmelder: **BASF Aktiengesellschaft**
**Carl-Bosch-Strasse 38**
**D-6700 Ludwigshafen(DE)**

(72) Erfinder: **Büschl, Rainer, Dr.**
**Hollandstrasse 14**
**D-6701 Roedersheim-Gronau(DE)**
Erfinder: **Echte, Adolf, Prof. Dr.**
**Leuschnerstrasse 42**
**D-6700 Ludwigshafen(DE)**
Erfinder: **Mertes, Jürgen, Dr.**
**Rheingoenheimer Strasse 57**
**D-6700 Ludwigshafen(DE)**

(54) **Wärmeformbeständige, transparente thermoplastische Formmasse, Verfahren zu ihrer Herstellung und ihre Verwendung.**

(57) Die Erfindung betrifft eine wärmeformbeständige, transparente thermoplastische Formmasse, enthaltend ein Copolymerisat aus den einpolymerisierten Monomeren

a) Methylmethacrylat und mindestens
b) einem N-substituierten Amid der Methacrylsäure.

Charakteristisch ist, daß in der Formmasse, bezogen auf a) + b), die Monomeren in folgenden Anteilen vorhanden sind

a) 5 bis 95 Gew.%,
b) 95 bis 5 Gew.% und,

daß ferner als Monomere b) ein N-substituiertes Amid der Formel

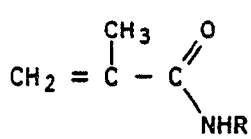

wobei R steht für primäre, sekundäre oder tertiäre Alkylreste, für Cycloalkylreste, Arylreste oder Aralkylreste mit 2 bis 12 C-Atomen.

Die Formmasse wird zur Herstellung wärmeformbeständiger Formteile oder Verbunde verwendet.

EP 0 335 233 A2

## Wärmeformbeständige, transparente thermoplastische Formmasse, Verfahren zu ihrer Herstellung und ihre Verwendung

Die Erfindung betrifft eine wärmeformbeständige, transparente thermoplastische Formmasse enthaltend ein Copolymerisat aus den einpolymerisierten Monomeren

a) Methylmethacrylat und mindestens

b) einem N-substituierten Amid der Methacrylsäure.

Zum Stand der Technik werden genannt:

(1) J 60 020 904

(2) J 58 042 668

(3) J 61 247 716 und

(4) DE-OS 3 438 432 und

(5) US-PS 2 311 548

Um die Wärmeformbeständigkeit von PMMA zu verbessern, sind technisch schon verschiedene Wege eingeschlagen worden, z.B. die Copolymerisation mit

a) α-Methylstyrol (α-MS; vgl. US-PS 3 072 622) oder

b) Maleinsäureanhydrid (MSA; vgl. EP 124 273) oder

c) die Amidierung bzw. Imidierung von Polymethylmethacrylat; (PMMA; vgl. EP 216 505).

Das Verfahren der US-PS 3 072 622 hat Nachteile, z.B. eine begrenzte Erhöhung der Wärmeformbeständigkeit, die - wie dort beschrieben - bereits bei ca. 30 % α-MS in ein Plateau hineinläuft.

Zudem verlangsamen hohe Anteile an α-Methylstyrol die Polymerisationsgeschwindigkeit sehr stark (Ito et al., Polymer Journal, Vol. 18, No. 9, 667-672 (1986), so daß keine wirtschaftliche Nutzung möglich ist.

Bei dem Verfahren der EP-A-124 273 liegen die Copolymerisationsparameter derart ungünstig, daß eine Copolymerisation schon mit wenigen Prozent MSA bei diskontinuierlicher Polymerisation zu Unverträglichkeit und damit zu mechanisch schlechten Produkten führt. Bei kontinuierlicher Betriebsweise können in jedem Fall nur niedrige MSA-Anteile eingeführt werden. Um dies zu vermeiden, wird die kontinuierliche oder diskontinuierliche Terpolymerisation mit Styrol angewendet.

Dieses Verfahren erfordert also Styrol (oder eventuell eine weitere Komponente) als Comonomer in einer Menge, die sich bereits wieder nachteilig auf die Produkteigenschaften auswirken, z.B. wird die Kratzfestigkeit oder die dem PMMA eigene hohe Witterungsstabilität reduziert. Die Menge des einpolymerisierbaren Maleinsäureanhydrids ist, wie erläutert, durch das ungünstige Copolymerisationsverhalten begrenzt und erfordert zum Teil hohen technischen Aufwand.

Die unter c) genannten Verfahren haben den Nachteil, daß zur Darstellung dieser erhöht wärmeformbeständigen PMMA-Formmassen neben der Polymerisation des MMA ein weiterer aufwendiger Verfahrensschritt notwendig ist, der das Endprodukt verteuert. Zudem stört die leichte Gelbfärbung der erhaltenen Produkte.

In (1) sind thermoplastische Polymerisate mit guter Wärmeformbeständigkeit und hoher Transparenz beschrieben, die durch intramolekulare Cyclisierungsreaktion zu N-substituierten Glutarimidgruppen führen. Die Cyclisierung erfolgt über ein Zwischenprodukt, einem Copolymerisat von MMA und N-Methylmethacrylat, wobei über die Eigenschaften des Zwischenprodukts keine Informationen gemacht werden. Copoolymerisate aus MMA und N-Methylmethacrylamid sind auch in (5) beschrieben.

In (2) ist eine schmutzabweisende Farbe auf Basis von (Meth)acrylamid enthaltenden Copolymeren beschrieben. Als Comonomere können u.a. Alkyl(meth)acrylatamide verwendet werden.

In (3) ist u.a. eine N-(meth)acrylamid enthaltende temperaturempfindliche Polymeremulsion beschrieben. Als Comonomeres ist in einer Aufzählung unter anderen auch MMA genannt. Diese Polymeremulsionen haben bei höherer Temperatur eine bessere Lichtdurchlässigkeit.

In (4) sind Wasserabtrennmittel aus unter anderem Copolymeren beschrieben, die z.B. 1 bis 15 Gew.% MMA und 99 bis 85 Gew.% N-Acryloylpyrrolidon enthalten. Diese Harze zeigen ein von der Temperatur abhängiges Wasseraufnahmevermögen und schrumpfen beim Erhitzen.

Es bestand die Aufgabe im Hinblick auf den unter a) bis c) angeführten Stand der Technik eine Formmasse zu schaffen, die eine höhere Wärmeformbeständigkeit aufweist und die unabhängig vom Herstellverfahren (kontinuierlich oder diskontinuierlich) transparent bzw. glasklar ist. Es galt daher ein Comonomer zur Verfügung zu stellen, das die von PMMA bekannte gute Transparenz beizubehalten ermöglicht, und die gute Wärmeformbeständigkeit von PMMA noch verbessert. Aus dem aus (1) bis (5)

genannten Stand der Technik konnte der Fachmann hierzu keinerlei Anregungen in Bezug auf die Verfahren a) bis c) entnehmen.

Die Lösung der Aufgabe gelingt durch eine Formmasse gemäß Patentanspruch 1.

Die Erfindung betrifft eine wärmeformbeständige, transparente, thermoplastische Formmasse, nämlich ein Copolymerisat aus den Monomeren

a) Methylmethacrylat und mindestens

b) einem N-substituierten Amid der Methacrylsäure.

Die Formmasse enthält, bezogen auf a) + b), die Monomeren in folgenden Anteilen

a) 5 bis 95 Gew.%,

b) 95 bis 5 Gew.% und enthält erfindungsgemäß als Monomeres b) ein N-substituiertes Amid der Formel

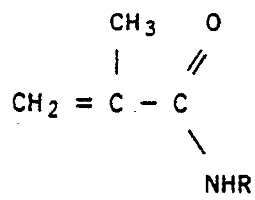

wobei R steht für einen primären, sekundären oder tertiären Alkylrest, für Cycloalkyl, Aryl oder Aralkyl mit 2 bzw. 6 bzw. 7 bis 12 C-Atomen.

Die erfindungsgemäße Formmasse weist bei Verwendung der Monomeren b) anders als die Formmassen aus MMA mit den Comonomeren MSA, α-Methylstyrol oder Imiden auch bei diskontinuierlicher Herstellung gutes Copolymerisationsverhalten (hinsichtlich Transparenz, Reaktionsgeschwindigkeit) auf und zeigt hohe Wärmeformbeständigkeiten.

Nachstehend werden der Aufbau der erfindungsgemäßen Formmasse und deren Herstellung beschrieben.

Die Formmasse enthält ein Copolymerisat aus den Monomeren a) MMA und b) mindestens einem N-substituierten Methacrylamid. Am Aufbau des Copolymerisats sind die genannten Monomeren in folgenden prozentualen Gewichtsanteilen, jeweils bezogen auf a) + b), beteiligt

a) 5 bis 95 Gew.%, vorzugsweise 10 bis 90 Gew.% und

b) 95 bis 5 Gew.%, vorzugsweise 90 bis 10 Gew.%.

Bezogen auf 100 Gew.-Teile des Terpolymerisats können in der Formmasse 0,01 bis 50 Gew.-Teile üblicher Zusatzstoffe vorhanden sein.

## Aufbau des Copolymerisats

Das Copolymerisat enthält die Monomeren a) und b) in statistischer Verteilung einpolymerisiert.

Als Monomeres b) ist ein Methacrylamid bevorzugt dessen Substituent R Ethyl, Isopropyl, tert.-Butyl, Cyclohexyl, Benzyl oder Phenyl ist.

Die Monomeren a) und b) müssen das Copolymerisat nicht ausschließlich aufbauen; es können auch weitere, von a) und b) verschiedene Monomere am Aufbau beteiligt sein.

## Herstellung der erfindungsgemäßen Formmasse

Die Herstellung der erfindungsgemäßen Formmasse kann durch radikalisch oder thermisch initiierte Polymerisation kontinuierlich oder diskontinuierlich erfolgen. Diese Polymerisation kann in Masse (Lösung), Masse-Suspension, Emulsion oder in Suspension erfolgen.

Bei den einzelnen Verfahren werden die für die Herstellung von PMMA, Polystyrol, SAN, Copolymerisaten oder den aus (1) bis (4) bekannten Copolymerisaten bekannten üblichen Hilfsmittel, wie Starter, Regler, Emulgatoren, Schutzkolloide in übliche Mengen etc. angewendet.

Die Massepolymerisation von Styrol und N-Substituierten Methacrylamiden wird durch radikalische

Initiierung durchgeführt.

Bei einer Initiierung mit einem in Radikale zerfallenden Starter wird z.B. eine Monomerenmischung aus 60 Gew.-Teilen Styrol und 40 Gew.-Teilen N-Phenylacrylamid in einem kontinuierlich durchflossenen gerührten Kessel auf 60-180 °C erhitzt (bevorzugt 100 bis 150 °C) und bei dieser Temperatur bis zu Umsätzen von ca. 40 bis 50 % polymerisiert. Die entstehende Polymerisationswärme kann durch Siedekühlung des Methylmethacrylats abgeführt werden. Ebenso ist ein Kreislauf des Polymersirups durch außerhalb des Kessels liegende Wärmetauscher möglich, in denen dann die Polymerisationswärme abgeführt werden kann.

Der ca. 45 Gew.% Copolymerisat enthaltende Polymersirup kann bei Temperaturen von 230 bis 300 °C in Entgasungseinheiten, wie sie aus US 2 941 986 bekannt sind, oder in üblichen Entgasungsextrudern in nicht umgesetzte Monomere und Polymerschmelze aufgetrennt werden. Die zurückerhaltenen Monomeren können dem Polymerisationskessel wieder zugeführt werden.

Eine radikalische Initiierung der Copolymerisation mit z.B. Perestern, Acylperoxiden, Peroxiden, Peroxydicarbonaten oder Azostartern, wie AIBN, ermöglicht niedrigere Polymerisationstemperaturen. So kann durch kontinuierliche Dosierung von tert.-Butylperpivalat zum Polymerisationskessel bereits bei 80 °C ein Polymerumsatz von 45 % erreicht werden. Die Einstellung des Molekulargewichts kann u.a. durch Verwendung von Mercaptanen beeinflußt werden. Die Aufarbeitung des Polymersirups erfolgt in gleicher Weise wie bei der thermischen Fahrweise.

Der Einsatz von Lösungsmitteln, von denen hier nur einige Erwähnung finden, wie z.B. Ethylbenzol, Toluol, Xylol, Cumol, Aceton, Methylethylketon oder Tetrahydrofuran, erlaubt einen höheren Polymerisationsumsatz im Reaktionskessel ohne daß die Viskositäten des Reaktionsansatzs unbeherrschbar hoch werden. Lösungsmittel können sowohl bei der thermischen als auch Starter-Fahrweise eingesetzt werden.

Die Masse-Suspensionspolymerisation wird vor allem diskontinuierlich ausgeführt. Bis zu einem Polymerumsatz von 30 bis 40 % erfolgt die Polymerisation in Masse durch radikalische Fahrweise bei 60 bis 160 °C. Nach Erreichen des angegebenen Umatzes werden zu 2 l Polymersirup 2 g Dicumylperoxid und eine Lösung aus 2 l Wasser, 50 g Polyvinylalkohol, 18 g Polyvinylpyrrolidon und 1,8 g $Na_4P_2O_7$ gegeben und nach folgendem Temperaturprogramm bis zu einem Umsatz von 98 bis 100 % weiterpolymerisiert:

3 Stunden bei 110 °C
3 Stunden bei 130 °C
3 Stunden bei 150 °C
3 Stunden bei 180 °C.

Die Suspensionspolymerisation kann in üblicher Weise mit Schutzkolloid durchgeführt werden. Methylmethacrylat und N-Phenylmethacrylamid werden gemeinsam mit Wasser, Natriumpyrophosphat, tert.-Butylperbenzoat, Benzoylperoxid und tert.-Dodecylmercaptan eingewogen; der Kessel mit $N_2$ gespült und innerhalb einer halben Stunde unter Rühren bei 300 Umdrehungen pro Minute auf 80 °C aufgeheizt. Der Reaktionsansatz wird 3 Stunden bei dieser Temperatur gehalten, dann werden Polyvinylpyrrolidin und Polyvinylalkohol, gelöst in Wasser, zugesetzt und die Polymerisation für 2 Stunden bei 90 °C fortgesetzt. Anschließend wird noch 2 Stunden bei 130 °C, 2 Stunden bei 150 °C und 2 Stunden bei 180 °C polymerisiert. Nach dem Abkühlen werden die Perlen gesiebt, gewaschen und getrocnket.

Für die Emulsionspolymerisation werden Styrol, N-Phenylmethacrylamid, Wasser, Natriumdodecylsulfonat und Kaliumperoxodisulfat mit einem Ultraturrax vordispergiert. Die Emulsion wird in einen Kessel, der mit Rührer, Rückflußkühler, Thermometer und Stickstoffanschluß ausgestattet ist, gefüllt und die Luft durch Stickstoff verdrängt. Dann wird unter langsamem Rühren im Wasserbad auf 70 °C aufgeheizt und nach den Anspringen der Polymerisation weitere 3 Stunden bei 70 °C polymerisiert. Anschließed wird die Dispersion be 80 °C polymerisiert. Nach dem Abkühlen wird die Dispersion mit Essigsäure koaguliert, das Polymere in einer Zentrifuge abgetrennt, gewaschen und als feuchte Masse einem Entgasungsextruder zugeführt. Das Restwasser und nicht umgesetztes Monomeres können hier abgezogen werden. Die Polymerschmelze wird aus einem Düsenkopf in Strängen ausgefahren und diese in Zylinder granuliert.

Schon während der Polymerisation oder danach können übliche Zusatzstoffe angewendet werden. Als Zusatzstoffe seien genannt: Schmiermittel, Entformungsmittel, Antioxidantien, Antistatika, Pigmente, Farbstoffe, Füllstoffe, wie Glas- und Kohlenstoff-Fasern oder Metalle in Flocken-, Pulver-oder Faserform und Flammschutzmittel.

Es ist auch möglich, die erfindungsgemäße Formmasse mit weiteren Thermoplasten abzumischen oder gegebenenfalls Formteile bzw. Verbunde mit anderen Thermoplasten herzustellen. Die Auswahl des Thermoplasten richtet sich nach dem dem Fachmann bekannten Anwendungsgebiet.

Die Einarbeitung der Zusatzstoffe nach der Polymerisation erfolgt dabei durch übliches Mischen bei Temperaturen von 200 bis 300 °C auf üblichen Mischern, Knetern, Walzen oder Extrudern.

Die erfindungsgemäße Formmasse kann nach den bekannten Verfahren der Thermoplastverarbeitung

bearbeitet werden, also z.B. durch Extrudieren, Spritzgießen, Kalandrieren, Hohlkörperblasen, Pressen oder Sintern: beson ders bevorzugt werden aus den erfindungsgemäßen Formmassen Formteile durch Spritzgießen für Behälter und Deckel für Küchengeräte, Instrumenten- und Leuchtenabdeckungen für die Kfz-Industrie, Verpackungsmaterialien etc. hergestellt.

Bevorzugt wird die erfindungsgemäße Formmasse angewendet für die Herstellung von Formteilen, die mit Flüssigkeiten oder Gasen bei hohen Temperaturen in Berührung kommen, z.B. Rohre für heiße Abwässer oder heiße Flüssigkeiten die Temperaturen bis 150 oder 170 °C aufweisen. Auch eine Anwendung für Behälter für Mikrowellengeräte ist möglich.

Die in der vorliegenden Anmeldung beschriebenen Parameter werden wie folgt bestimmt:

1. Die Glastemperatur,Tg, nach der DSC-Methode (ASTM D 3418-82).
2. Die Viskositätszahl, VZ, analog DIN 53726, gemessen 0,5 %ig in Chloroform bei 23 °C .
3. Der Schmelzflußindex, MFI, analog DIN 53735 bei 200 °C und 21,6 kp Belastung in g/10 min.
4. Transparenz durch visuelle Beurteilung von Preßplättchen, Dicke 1 mm

Die für die Durchführung der in den Beispielen beschriebenen Polymerisationen erforderlichen Monomeren b) wurden durch Umsetzung von Methacrylsäure (Ester, Chlorid) mit primären oder sekundären Aminen erhalten. DE 31 23 970 gibt einen Überblick über auch in technischem Maßstab durchführbare Synthesewege. Die hier eingesetzten Methacrylamide besaßen alle Reinheitsgrade von >99 %.

Die Erfindung wird durch die nachfolgenden Beispiele und mehrere Vergleichsversuche näher erläutert. Die in den Beispielen genannten Teile und Prozente beziehen sich, sofern nicht anders angegeben, auf das Gewicht.

Beispiele 1 bis 12 und Vergleichsversuche I und II

Die in den Tabellen 1 und 2 beschriebenen Copolymerisate wurden in einem Druckreaktor in Masse hergestellt.

Die N-substituierten Methacrylamide wurden bei 60 °C in der angegebenen Menge MMA gelöst und mit jeweils 0,2 Gew.-Teilen Benzoylperoxid, 0,1 Gew.-Teil Dicumylperoxid und 0,3 Gew.-Teilen tert.-Dodecylmercaptan versetzt. 80 ml dieser Lösung wurde in einen Druckreaktor gefüllt, dieser abwechselnd mit Stickstoff gespült und im Vakuum entgast. Anschließend wurde unter Stickstoffatmosphäre bis zum praktisch vollständigen Umsatz polymerisiert. Die Polymerisation erfolgte für 24 Stunden bei 80 °C, 8 Stunden bei 120 °C und 8 Stunden bei 170 °C.

Von den in Methylenchlorid löslichen Polymeren wurden 10 %ige Lösungen angefertigt, die Polymeren mit dem 6-fachen Überschuß Ethanol ausgefällt und nach dem Filtrieren bei 150 °C 12 Stunden lang im Vakuum getrocknet. Die Tg-Messungen (DSC-Methode) wurden an bei 200 °C hergestellten Rundscheiben vorgenommen.

In Methylenchlorid unlösliche Polymere wurden in einer Trockenpistole (213 °C/10 Torr/40 min) von Restmonomeren befreit. Die Tg-Messung erfolgte auch hier an bei 200 °C hergestellten Rundscheiben.

In die Tabellen sind die Zusammensetzung, die Glastemperatur, Tg, als Maß für die Wärmeformbeständigkeit, die Viskositätszahlen bzw. Schmelzfließindices der Copolymerisate mit aufgenommen worden.

Der Vergleichsversuch I repräsentiert den Ausgangspunkt für die Aufgabenstellung "Erhöhung der Wärmeformbeständigkeit". Zur Erläuterung sei vermerkt, daß die in den Tabellen angegebenen Glastemperaturen etwas höher sind als die Vicat-Temperaturen.

Vergleichsversuch II entspricht dem Stand der Technik gemäß Druckschrift (1), wobei darauf hinzuweisen ist, daß die Wärmeformbeständigkeit in (1) nicht erwähnt ist und auch nicht bestimmt wurde.

Copolymerisate aus MMA und z.B. 70 Gew.% N-Methylmethacrylamid (MMAA) zeigen einen Tg-Wert von 171 °C, solche mit 60 % MMAA einen solchen von ca. 160 °C (beide Produkte sind unlöslich). Innerhalb des beanspruchten Bereichs lassen sich Formmassen mit sehr gutem Schmelzfluß, d.h. guter Verarbeitung (R = Benzyl) oder solche mit verringerter Wasseraufnahme herstellen (R = Phenyl).

Tabelle 1

| Copolymere aus MMA und N-Benzylmethacrylamid (BzMMA) | | | | | | | |
|---|---|---|---|---|---|---|---|
| Beispiel | MMA (Gew.%) | Bz MMA (Gew.%) | Tg nach DSC (°C) | Löslichkeit in $CHCl_3$ | VZ | MFI | Transparenz |
| 1 | 90 | 10 | 119 | gut | 76 | 17,7 | klar |
| 2 | 80 | 20 | 124 | gut | 72 | 15,8 | klar |
| 3 | 60 | 40 | 131 | gut | 73 | 12,4 | klar |
| 4 | 40 | 60 | 136 | gut | 68 | 10,1 | klar |
| Vergleichsversuch I | 100 | - | 115 | gut | 78 | 18,5 | klar |
| II | 50 | 50* | 152 | unlöslich | | 8,2 | |

* MMAA

Tabelle 2

| Copolymere aus Methacrylsäuremethylester (MMA) und N-Phenylmethacrylamid (PhMAA) | | | | | | | |
|---|---|---|---|---|---|---|---|
| Beispiel | MMA (Gew.%) | PhMAA (Gew.%) | Tg nach DSC (°C) | Löslichkeit in $CHCl_3$ | VZ | MFI | Transparenz |
| 5 | 90 | 10 | 119 | gut | 65,3 | 12,5 | klar |
| 6 | 80 | 20 | 126 | gut | 61,4 | 11,4 | klar |
| 7 | 70 | 30 | 135 | gut | 56,2 | 10,4 | klar |
| 8 | 60 | 40 | 142 | gut | 58,9 | 9,8 | klar |
| 9 | 50 | 50 | 150 | gut | 52,7 | 7,6 | klar |
| 10 | 40 | 60 | 159 | gut | 56,3 | 5,4 | klar |
| 11 | 30 | 70 | 165 | gut | 55,3 | 4,9 | klar |
| 12 | 20 | 80 | 174 | gut | 50,5 | 3,9 | klar |

## Ansprüche

1. Wärmeformbeständige, transparente thermoplastische Formmasse, nämlich Copolymerisat aus den Monomeren
a) Methylmethacrylat und
b) einem N-substituierten Amid der Methacrylsäure,
enthaltend bezogen auf a) + b), die Monomeren in folgenden Anteilen
≪ a) 5 bis 95 Gew.%,
b) 95 bis 5 Gew.%, wobei
als Monomer b) ein N-substituiertes Amid der Formel (I) verwendet wird

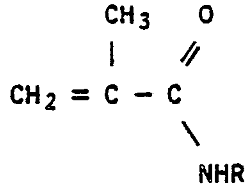

(I)

wobei R steht für einen primären, sekundären oder tertiären Alkylrest mit 2 bis 12 C-Atomen, für Cycloalkyl, Aryl oder Aralkyl mit 2 bzw. 6 bzw. 7 bis 12 C-Atomen.

2. Formmasse nach Anspruch 1, enthaltend bezogen auf 100 Gew.-Teile des Copolymerisats, 0,01 bis 50 Gew.-Teile üblicher Zusatzstoffe aufweist.

3. Formmasse nach Anspruch 1, enthaltend ein Copolymerisat aus den Monomeren a) und b) in folgenden Anteilen:

a) 10 bis 90 Gew.%,

b) 90 bis 10 Gew.%.

4. Formmasse nach Anspruch 1 enthaltend als Monomer b) eine Verbindung (I), deren Substituent R Ethyl, Isopropyl, tert.-Butyl, Cyclohexyl, Phenyl oder Benzyl ist.

5. Formmasse nach Anspruch 4, dadurch gekennzeichnet, daß R Phenyl bedeutet.

6. Verfahren zur Herstellung von Formmassen nach Anspruch 1 durch kontinuierliche oder diskontinuierliche radikalisch und/oder thermisch initiierte Polymerisation.

7. Verwendung der Formmasse nach Anspruch 1 zur Herstellung von wärmeformbeständigen transparenten Formteilen.